# FASCICULE DE BREVET EUROPEEN

(11) **EP 0 725 959 B1**
(45) Date de publication et mention de la délivrance du brevet: **07.01.1998**
(21) Numéro de dépôt: 95900162.9
(22) Date de dépôt: 25.10.1994
(51) Int. Cl.: G07F 9/10, G07F 11/36, B65G 33/06

(54) **APPAREIL DISTRIBUTEUR D'ASSIETTES GARNIES, NOTAMMENT POUR LA RESTAURATION COLLECTIVE**
BELEGTEN-TELLER-ABGABEVORRICHTUNG, INSBESONDERE FÜR GASTSTÄTTEN
APPARATUS FOR DISPENSING READY-MADE MEALS, PARTICULARLY FOR USE IN INSTITUTIONAL CATERING

(30) Priorité: 25.10.1993 FR 9313317
(43) Date de publication de la demande: 14.08.1996
(73) Titulaire: DeLaRue, Bernard, 19600 Saint-Pantaléon-de-Larche (FR); Tixeront, Paule, 19600 Saint-Pantaléon-de-Larche (FR)
(72) Inventeur: DeLaRue, Bernard, 19600 Saint-Pantaléon-de-Larche (FR); Tixeront, Paule, 19600 Saint-Pantaléon-de-Larche (FR)
(74) Mandataire: Moncheny, Michel
(86) Numéro de dépôt international: FR9401243
(87) Numéro de publication internationale: WO9512183

(56) Documents cités:
- EP-A- 0 352 179
- CH-A- 585 444
- DE-A- 2 556 865
- FR-A- 704 938
- FR-A- 1 276 033
- US-A- 3 707 221

## Description

La présente invention a pour objet un appareil distributeur d'assiettes garnies, notamment pour la restauration collective.

On connaît des distributeurs de plats qui sont pilotés par des automates avec cartes de paiement automatique.

De tels distributeurs sont complexes, tant dans les moyens de transfert que dans les modes de rechargement.

Il se trouve que le prix est proportionnel et la fiabilité est inversement proportionnelle à cette complexité.

Il existe donc un créneau pour des appareils d'une grande fiabilité, d'un prix revient compatible avec les capacités de distribution recherchées, qui permettent de conserver à une température contrôlée les plats stockés, dont le réapprovisionnement est simple, qui sont compacts tant en surface occupée au sol qu'en hauteur, et dont le raccordement aux réseaux de service est simplifié.

C'est le but de la présente invention de proposer un tel appareil distributeur.

A cet effet, le présent appareil distributeur pour assiettes garnies comprend un bâti fixe dans lequel est disposé un châssis au sein duquel sont montés des moyens distributeurs et se caractérise en ce que ces moyens distributeurs comprennent deux enroulements hélicoïdaux à axes de rotation verticaux, avec des sens de rotation opposés, au moins deux spires, situées à une même hauteur et appartenant respectivement l'une au premier enroulement et l'autre au second enroulement, étant prévues pour recevoir une assiette centrée sensiblement au point de tangence. Selon une autre caractéristique de l'appareil selon l'invention, il est prévu des moyens d'évacuation et d'éjection de chaque assiette hors des enroulements lorsque cette assiette est au-dessus de la dernière spire de chaque enroulement.

Selon un mode de réalisation particulier, les moyens d'évacuation et d'éjection comprennent un premier et un second ergots solidaires respectivement de chacune des spires d'extrémité supérieure de chacun des enroulements, orientés vers le haut, faisant saillie au-dessus des dernières spires sur une hauteur sensiblement égale à la hauteur de l'assiette. Ces ergots sont venus de pliage avec les dernières spires.

En outre, le châssis de l'appareil distributeur comprend des moyens de guidage vertical des assiettes. Selon un mode de réalisation particulier de l'invention, l'appareil distributeur comprend un plateau basculant de présentation, prévu pour recevoir l'assiette distribuée, après éjection par les deux ergots.

Ce plateau basculant est monté sur un arbre disposé de façon dissymétrique et perpendiculairement à la direction de déplacement de l'assiette, de façon à lui conférer une position instable.

Selon un perfectionnement de l'appareil, la dernière spire de l'enroulement hélicoïdal aval comprend une came sur une partie de sa périphérie, prévue pour coopérer avec le plateau basculant de façon à le maintenir horizontal lorsque cette came est en vis à vis de ce plateau.

De plus, le châssis est monté mobile par rapport au bâti entre deux positions, l'une basse, de service et l'autre haute, de réapprovisionnement.

Enfin, l'appareil distributeur selon l'invention est disposé dans une enceinte à atmosphère contrôlée.

L'appareil distributeur selon l'invention est décrit ci-après pour un mode de réalisation particulier, non limitatif, en accord avec les dessins annexés qui représentent :
- figure 1, une vue en élévation latérale de l'appareil selon l'invention, avant évacuation et éjection,
- figure 1A, une vue de dessus de l'appareil de la figure 1,
- figure 2, une vue en élévation latérale de l'appareil selon l'invention, après évacuation et éjection, et
- figure 2A, une vue de dessus de l'appareil de la figure 2.

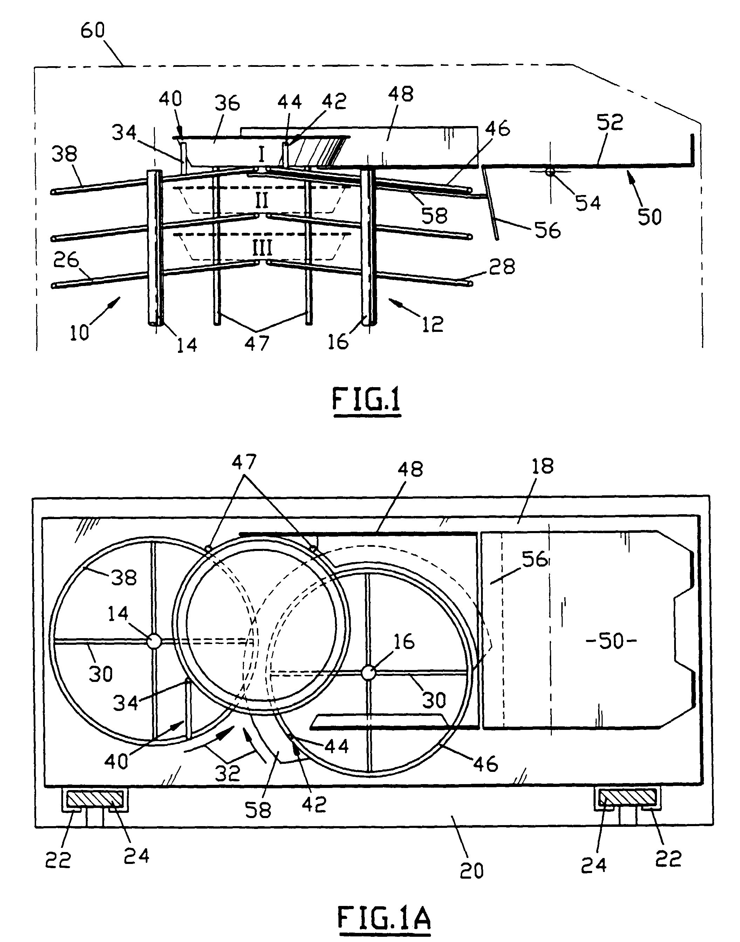

Sur la figure 1, on a représenté un premier 10 et un second 12 enroulements juxtaposés, montés avec leurs axes 14 et 16 de rotation verticaux.

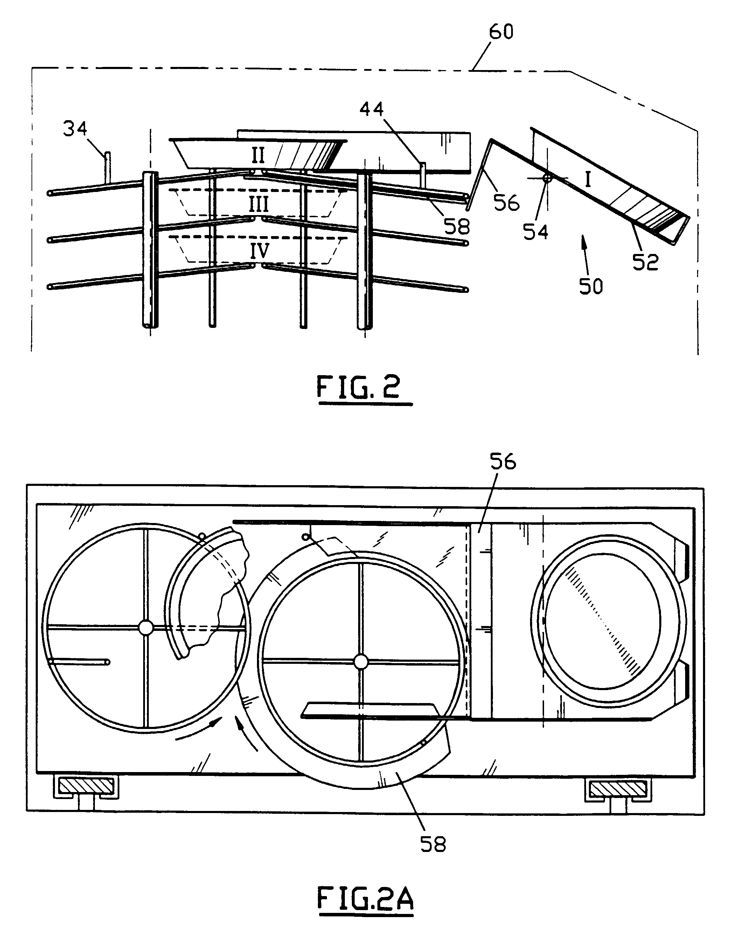

Ces enroulements sont disposés sur un châssis 18 mobile par rapport à un bâti fixe 20, grâce à des glissières 22, coulissantes par rapport à des poteaux 24 solidaires dudit bâti, plus particulièrement visibles sur les figures 2 et 2A.

Chaque enroulement comprend des spires 26 et 28 respectivement, solidaires des arbres 14 et 16 correspondants.

Des rayons 30 assurent la rigidité de l'ensemble. Ces enroulements sont disposés de façon qu'au point de tangence, deux spires juxtaposées soient à la même hauteur, c'est-à-dire que les enroulements sont décalés en rotation de 180°, l'un par rapport à l'autre.

Les deux enroulements sont entraînés en rotation, avec des sens opposés, comme indiqué sur les figures 2 et 2A par les flèches.

Les deux enroulements ont chacun une particularité. Le premier enroulement 10 comprend un ergot 34, orienté vers le haut, venu de pliage avec la dernière spire.

Cet ergot a une hauteur sensiblement égale à celle d'une assiette à distribuer, référencée sur les dessins en 36.

Cet ergot est disposé sensiblement entre l'arbre 14 et la dernière spire supérieure 38 à laquelle il est fixé et au-dessus de laquelle il fait saillie.

Cet ergot constitue les moyens d'évacuation 40. L'appareil comprend en outre des moyens d'éjection 42 qui comprennent également un ergot 44 qui est solidaire de la spire 46 d'extrémité supérieure du second enroulement 12.

Cet ergot est plus particulièrement orienté verticalement et disposé au droit de la spire 46 proprement dite, faisant saillie au-dessus de cette spire. Cet ergot est fixé avec un retard angulaire par rapport au premier.

Cet ergot est également venu de pliage avec la dernière spire 46.

L'appareil comprend aussi des rails de guidage 47 des assiettes, orientés verticalement, parallèlement aux arbres de rotation des enroulements.

Ces rails de guidage sont disposés de façon que les assiettes viennent en appui continu durant la rotation des enroulements, maintenant les assiettes sensiblement centrées sur le point de tangence.

Le châssis comprend un rebord 48 de guidage horizontal.

L'appareil comprend en outre des moyens de présentation 50, comportant un plateau 52, monté basculant sur un arbre 54 horizontal et décalé par rapport au centre du plateau, de façon à le placer en position instable entre deux positions stables, l'une horizontale et l'autre inclinée, représentées sur les figures 1 et 1A.

Ce plateau comprend aussi une jupe 56 qui fait saillie vers le bas.

Cette jupe coopère avec une came 58 solidaire de la dernière spire 46 du second enroulement 12.

Cette came est circulaire, d'un diamètre légèrement supérieur à celui de la spire 46 qui le porte, avec une interruption sur un secteur sensiblement égal à 180°.

De plus, l'appareil est disposé dans une enceinte 60, schématiquement représentée sur les différentes figures.

Cette enceinte est à atmosphère contrôlée, par exemple degré hygrométrique et température stabilisés et réglables.

De tels moyens sont bien connus et ne font pas partie de la présente invention.

De même, les arbres de rotation sont entraînés par des moyens moteurs, non représentés pour la simplification des dessins, dont la mise en place est à la portée de l'homme de l'art.

Le fonctionnement de l'appareil selon l'invention est décrit ci-après à l'aide des différentes figures dont la description détaillée a été effectuée ci-avant.

Le châssis est relevé afin de procéder à son approvisionnement par introduction manuelle des assiettes garnies à distribuer.

Cette position haute est obtenue par déplacement en translation des glissières 22 solidaires du châssis 18 par rapport aux poteaux 24 fixés au bâti fixe 20. Le châssis est ensuite ramené en position basse. Le carter est équipé d'une ouverture correspondante pour rendre possible cette opération.

Dès lors, des moyens de paiement et de déclenchement de la distribution sont prévus pour mettre en rotation les arbres d'entraînement à l'aide des moteurs. Lorsque l'ordre de délivrance d'une assiette est envoyé à l'appareil distributeur selon l'invention, les arbres sont mis en rotation de 360°.

Dans la position initiale des figures 1 et 2, l'assiette à distribuer repose sur les deux spires d'extrémité 38 et 46.

Dès la mise en rotation simultanée des enroulements, le premier ergot 34 vient en contact avec l'assiette, l'évacuant vers la spire supérieure 46 du second enroulement.

Lorsque la rotation se poursuit, le second ergot 44 entre à son tour en contact avec l'assiette, ce qui provoque son éjection vers le plateau de présentation 52.

Le plateau est maintenu par la came dans la position horizontale, ce qui permet le passage de l'assiette du second enroulement vers le plateau sans heurt. La rotation se poursuit jusqu'à ce que le secteur d'ouverture de la came soit au droit de la jupe du plateau.

Dès lors, le plateau n'est plus maintenu, il bascule autour de l'arbre 54 pour prendre la position stable représentée sur les figures lA et 2A.

L'assiette I est sur le plateau de présentation et une nouvelle assiette II est montée et se trouve sur les spires d'extrémité en remplacement de l'assiette I.

De même, les autres assiettes III et IV montent d'un cran.

Dans cette position, le plateau, basculé, interdit l'accès à l'assiette suivante, tandis que la première est disponible pour le consommateur.

Ainsi qu'on peut le constater, cet appareil est simple de conception et d'utilisation tout en proposant les services d'appareils de dimensions et de complexité nettement supérieures.

Cet appareil peut être équipé de moyens de paiement à cartes ou de tout autre moyen de paiement électronique.

## Revendications

1. Appareil distributeur d'assiettes garnies une à une, comprenant un bâti (20) fixe dans lequel est disposé un châssis (18) au sein duquel sont montés des moyens distributeurs, caractérisé en ce que ces moyens distributeurs comprennent deux enroulements (10, 12) hélicoïdaux avec leurs axes (14, 16) de rotation verticaux et des sens de rotation opposés, au moins deux spires, situées à une même hauteur et appartenant respectivement l'une au premier enroulement et l'autre au second enroulement, étant prévues pour recevoir une assiette (36), au point de tangence.

2. Appareil distributeur selon la revendication 1, caractérisé en ce qu'il comprend des moyens d'évacuation (40) et d'éjection (42) de chaque assiette (36) hors des enroulements lorsque cette assiette est au-dessus de la dernière spire (38, 46) de chaque enroulement.

3. Appareil distributeur selon la revendication 1 ou 2, caractérisé en ce que les moyens d'évacuation (40) et d'éjection (42) comprennent un premier (34) et un second (44) ergots, orientés vers le haut, solidaires respectivement de chacune des spires (38, 46) d'extrémité supérieure de chacun des enroulements et faisant saillie au-dessus des dernières spires sur une hauteur sensiblement égale à la hauteur d'une assiette.

4. Appareil distributeur selon la revendication 3, caractérisé en ce que les ergots (34, 44) sont venus de pliage avec les dernières spires.

5. Appareil distributeur selon l'une quelconque des revendications précédentes, caractérisé en ce que le châssis (18) comprend des moyens de guidage vertical des assiettes.

6. Appareil distributeur selon l'une quelconque des revendications précédentes, caractérisé en ce qu'il comprend des moyens de présentation (50) comportant un plateau (52) basculant, prévu pour recevoir l'assiette éjectée.

7. Appareil distributeur selon la revendication 6, caractérisé en ce que le plateau (52) basculant est monté sur un arbre (54) disposé de façon dissymétrique et perpendiculairement à la direction de déplacement de l'assiette, de façon à conférer audit plateau une position instable.

8. Appareil distributeur selon la revendication 6 ou 7, caractérisé en ce que la dernière spire (46) de l'enroulement (12) hélicoïdal aval comprend une came (58) sur une partie de sa périphérie, prévue pour coopérer avec le plateau (52) basculant, de façon à le maintenir horizontal lorsque cette came est en vis à vis de ce plateau et que celui-ci est vide.

9. Appareil distributeur selon l'une quelconque des revendications précédentes, caractérisé en ce que le châssis (18) est monté mobile par rapport au bâti (20) entre deux positions l'une basse, de service et l'autre haute, de réapprovisionnement.

10. Appareil distributeur selon la revendication 9, caractérisé en ce qu'il est disposé dans une enceinte (60) à atmosphère contrôlée.

## Patentansprüche

1. Vorrichtung zum aufeinanderfolgenden Abgeben garnierter Teller mit einem Gestell (20), in dem ein Chassis (18) befestigt angeordnet ist, innerhalb dessen Abgabemittel angebracht sind,
dadurch gekennzeichnet,
daß die Abgabemittel zwei Drehspiraleinrichtungen (10, 12) mit vertikalen Rotationsachsen (14, 16) und entgegengesetztem Drehsinn, mit zumindest zwei Windungen, die auf gleicher Höhe liegen, von denen die eine zur ersten Drehspiraleinrichtung und die andere zur zweiten Drehspiraleinrichtung gehört, welche zum Aufnehmen eines Tellers (36) im Punkt der Tangente vorgesehen sind, aufweisen.

2. Abgabevorrichtung nach Anspruch 1,
gekennzeichnet durch Entleerungsmittel (40) und Auswurfmittel (42) für jeden Teller (36) über den Drehspiraleinrichtungen, wenn dieser Teller oberhalb der letzten Windung (38, 46) jeder Drehspiraleinrichtung liegt.

3. Abgabevorrichtung nach Anspruch 1 oder 2,
dadurch gekennzeichnet,
daß die Entleerungsmittel (40) und die Auswurfmittel (42) einen ersten (34) und einen zweiten (44) Vorsprung aufweisen, die nach oben gerichtet sind und jeweils einstückig mit jeder der Windungen (38, 46) am oberen Ende jeder Drehspiraleinrichtung ausgebildet sind und eine Auskragung oberhalb der letzten Windungen auf einer im wesentlichen gleichen Höhe wie der Höhe eines Tellers bilden.

4. Abgabevorrichtung nach Anspruch 3,
dadurch gekennzeichnet,
daß die Vorsprünge (34, 44) durch Aufbiegung der letzten Windungen gebildet sind.

5. Abgabevorrichtung nach einem der vorhergehenden Ansprüche,
dadurch gekennzeichnet,
daß das Chassis (18) vertikale Führungsmittel für die Teller aufweist.

6. Abgabevorrichtung nach einem der vorhergehenden Ansprüche,
dadurch gekennzeichnet,
daß sie Präsentationsmittel (50) mit einer Kipp-Platte (52) aufweist, welche zum Aufnehmen eines ausgeworfenen Tellers vorgesehen sind.

7. Abgabevorrichtung nach Anspruch 6,
dadurch gekennzeichnet,
daß die Kipp-Platte (52) auf einer Achse (52) angebracht ist, welche unsymmetrisch und senkrecht zur Beförderungsrichtung des Tellers angeordnet ist, so daß sie der Platte eine unstabile Position vermittelt.

8. Abgabevorrichtung nach Anspruch 6 oder 7,
dadurch gekennzeichnet,
daß die letzte Windung (46) der Drehspiraleinrichtung (12) unterstromig eine Nocke (58) auf einem Abschnitt ihrer Peripherie aufweist, welche zum Zusammenwirken mit der Kipp-Platte (52) vorgesehen ist, so daß sie horizontal gehalten wird, bis dieser Nocken gegenüber der Platte liegt und diese leer ist.

9. Abgabevorrichtung nach einem der vorhergehenden Ansprüche,
dadurch gekennzeichnet,
daß das Chassis (18) bezüglich des Gestells (20) zwischen zwei Positionen beweglich ist, nämlich einer unteren zum Service und einer weiteren oberen zum Nachlegen.

10. Abgabevorrichtung nach Anspruch 9,
dadurch gekennzeichnet,
daß sie in einer Einfassung (60) mit gesteuerter Atmosphäre angeordnet ist.

## Claims

1. Apparatus for dispensing ready-made meals one at a time, comprising a fixed housing (20) in which is arranged a frame (18), within which are mounted dispensing means, characterised in that the dispensing means comprise two helical windings (10, 12) with their axes of rotation (14, 16) vertical and rotating in opposite directions, at least two turns, located at the same height and with one the first winding and the other on the second winding, being provided to receive a plate (36) at the point of tangency.

2. Dispensing apparatus according to claim 1, characterised in that it includes means for removal (40) and ejection (42) of each plate (36) from the windings when the plate is above the last turn (38, 46) of each winding.

3. Dispensing apparatus according to claim 1 or 2, characterised in that the means for removal (40) and ejection (42) comprise a first lug (34) and a second lug (44) directed upwardly and integral with a respective one of the turns (38, 46) at the upper end of each winding and forming projections above the last turns at a height approximately equal to the height of a plate.

4. Dispensing apparatus according to claim 3, characterised in that the lugs (34, 44) are formed by folding the last turns.

5. Dispensing apparatus according to any one of the preceding claims, characterised in that the frame (18) includes means for vertical guidance of the plates.

6. Dispensing apparatus according to any one of the preceding claims, characterised in that it includes presentation means (50) comprising a rocking plate (52), provided for receiving the ejected plate.

7. Dispensing apparatus according to claim 6, characterised in that the rocking plate (52) is mounted on a shaft (54) disposed asymmetrically and perpendicular to the direction of the displacement of the plate, in such a way as to provide the said plate with an unstable position.

8. Dispensing apparatus according to claim 6 or 7, characterised in that the last turn (46) of the downstream helical winding (12) includes a cam (58) on a part of its periphery, provided for cooperating with the rocking plate (52), in such a way as to maintain it horizontal when the cam is opposite the rocking plate and the rocking plate is empty.

9. Dispensing apparatus according to any one of the preceding claims, characterised in that the frame (18) is movably mounted relative to the housing (20) between two positions, the one low for service and the other high for replenishment.

10. Dispensing apparatus according to claim 9, characterised in that it is arranged in a controlled atmosphere enclosure (60).
